# EUROPÄISCHE PATENTANMELDUNG

(11) **EP 1 108 492 A2**
(43) Veröffentlichungstag der Anmeldung: **20.06.2001**
(21) Anmeldenummer: 00122926.9
(22) Anmeldetag: 21.10.2000
(51) Int. Cl.: B23K 11/00, B23K 37/04

(54) **Verfahren und Vorrichtung zum Verbinden der Enden von Metallbändern mittels Widerstandsschweissen**

(30) Priorität: 17.12.1999 DE 19961351
(71) Anmelder: Sundwig GmbH, 58675 Hemer (DE); A.I. WELDERS LIMITED, Inverness, IV1 1LZ, Scotland (GB)
(72) Erfinder: Boguslawsky, Klaus, 58640 Iserlohn (DE); McKenzie, Ian, 58706 Menden (DE); Cossar, Harry, Inverness IV2 4LQ (GB); Sherriffs, Neill, Inverness IV2 3RU (GB)
(74) Vertreter: Cohausz & Florack

(57) **Zusammenfassung**

Die vorliegende Erfindung betrifft ein Verfahren und eine Vorrichtung zum Verbinden der Enden 1,2 von zwei in einer Walzstraße verarbeiteten Bändern W1,W2 aus Metall, welche auf ihrer Ober- und/oder Unterseite eine auf ihnen haftende Schicht aufweisen, durch Widerstandsschweißen, bei dem eine Schweißeinrichtung 5',5";25',25" auf die ihr jeweils zugeordnete Oberfläche O1,O2 im Bereich der Enden 1,2 der Bänder W1,W2 aufgesetzt wird. Die Erfindung ermöglicht auf kostengünstige Weise das sichere Verbinden der Bandenden durch Widerstandsschweißen auch dann, wenn auf ihnen eine fest haftende Schicht vorhanden ist. Dies wird dadurch erreicht, daß vor dem Widerstandsschweißen die Schicht in dem Bereich 14,15 mit Perforationen versehen wird, in welchem während des Schweißvorgangs die Schweißverbindung erzeugt wird.

## Beschreibung

Die Erfindung betrifft ein Verfahren zum Verbinden der Enden von zwei in einer Walzstraße verarbeiteten Bändern aus Metall, welche auf ihrer Ober- und/oder Unterseite eine auf ihnen haftende Schicht aufweisen, durch Widerstandsschweißen, bei dem eine Schweißeinrichtung auf die ihr jeweils zugeordnete Oberfläche im Bereich der Enden der Bänder aufgesetzt wird. Ebenso betrifft die Erfindung eine für das Verbinden der Enden derartiger Metallbänder geeignete Vorrichtung.

Üblicherweise wird bei der Inline-Erzeugung von Metallbändern in einer Walzstraße das dem Bandanfang zugeordnete Ende eines neu in Bearbeitung zu nehmenden Bandes mit dem endseitigen Bandende des zuvor gewalzten Bandes verbunden. In der Praxis werden die Bandenden zu diesem Zweck miteinander verschweißt. Durch eine solche Verschweißung ist sichergestellt, daß das neu in Bearbeitung genommene Band sicher in die Walzstraße gezogen wird, ohne daß es dazu zusätzlicher Vorkehrungen oder einer größeren Unterbrechung des Produktionsbetriebes bedarf.

Für das Verschweißen der Bandenden von Metallbändern, die eine saubere Oberfläche aufweisen, wie es beispielsweise bei entzunderten Kaltbändern der Fall ist, eignen sich insbesondere Widerstandsschweißeinrichtungen. Diese Einrichtungen werden mit ihren Elektroden im Bereich der zu erzeugenden Schweißnaht jeweils auf die Oberfläche der leitfähigen Bänder mit oder ohne zusätzliche Krafteinwirkung aufgesetzt, so daß die zum Schweißen erforderliche Wärme durch den Stromfluß über den jeweils vorhandenen elektrischen Widerstand erzeugt wird.

Sollen die Bandenden dabei über ihre gesamte Breite miteinander verschweißt werden, so werden üblicherweise radförmige, drehbar gelagerte Elektroden verwendet, die während des Schweißens entlang der jeweiligen Bandendkante bewegt werden.

Ein wesentlicher Vorteil des Widerstandsschweißens besteht darin, daß sich hohe Schweißgeschwindigkeiten mit relativ einfach ausgebildeten und folglich kostengünstigen Schweißvorrichtungen erzielen lassen. Dies ermöglicht es, die für das Verbinden der Bandenden benötigten Produktionsunterbrechungen auf ein Minimum zu reduzieren. Nachteilig ist jedoch, daß beim Widerstandsschweißen ein ausreichender elektrischer Kontakt zwischen den Elektroden und den zu verschweißenden Bandenden gewährleistet sein muß, um ein ordnungsgemäßes Schweißergebnis zu erzielen.

Dementsprechend hat der Versuch, das Widerstandsschweißen für das Verbinden von Warmbändern zu verwenden, die mit einer ungünstige Schweißeigenschaften aufweisenden Zunderschicht behaftet sind, gezeigt, daß eine ordnungsgemäße Schweißverbindung nur unter großen Schwierigkeiten hergestellt werden kann.

Zur Beseitigung dieser Schwierigkeiten ist vorgeschlagen worden, vor der Widerstandsverschweißung eine vollständige, großflächige Entzunderung der jeweiligen Bandenden vorzunehmen. Die dazu erforderlichen Maßnahmen führen jedoch dazu, daß die hinsichtlich der Kosten und der Arbeitsgeschwindigkeit gegenüber anderen Schweißverfahren, wie beispielsweise dem Lichtbogenschweißen, bestehenden Vorteile des Widerstandsschweißens eingebüßt werden.

Die Aufgabe der Erfindung besteht darin, ein Verfahren und eine Vorrichtung anzugeben, mit denen auch das sichere Verbinden von mit einer auf ihnen haftenden Schicht versehenen Metallbändern durch Widerstandsschweißen auf kostengünstige Weise möglich ist.

In Bezug auf ein Verfahren der eingangs erläuterten Art wird diese Aufgabe dadurch gelöst, daß vor dem Widerstandsschweißen die Schicht in dem Bereich mit Perforationen versehen wird, in welchem während des Schweißvorgangs die Schweißverbindung erzeugt wird.

Gemäß der Erfindung wird ein ausreichender Kontakt zwischen der Widerstandsschweißeinrichtung und dem jeweiligen Metallband dadurch hergestellt, daß die auf den Metallbändern haftende Schicht mit Öffnungen versehen wird, in deren Bereich die Oberfläche der Metallbänder freiliegt. Auf diese Weise besteht an diesen Stellen während des Schweißvorgangs jeweils ein unmittelbarer Kontakt zwischen der Widerstandsschweißeinrichtung und dem Metallband. Überraschenderweise hat sich herausgestellt, daß durch die Vielzahl der durch die Perforierung der Schicht erzeugten Kontaktflächen des Metallbands ein für die notwendige Wärmeentwicklung ausreichender Stromfluß gewährleistet ist.

Die Perforation der auf dem Metallband haftenden Schicht läßt sich auf einfache Weise kostengünstig durchführen, da dazu lediglich die betreffende Schicht durchbrochen werden muß. Auf diese Weise sind die Kosten der Vorbereitung der zu verschweißenden Bandenden für das Widerstandsschweißen auf ein Minimum reduziert, so daß sich die Vorteile dieses Schweißverfahrens auch beim Verbinden von mit einer Schicht versehenen Metallbändern vorteilhaft nutzen läßt.

Besonders geeignet ist das erfindungsgemäße Verfahren zum Verbinden der Enden von Warmbändern aus Stahl, die in einer Walzstraße verarbeitet werden sollen, ohne zuvor von der auf ihnen haftenden Oxidschicht befreit worden zu sein. Insbesondere bei der Verarbeitung von mit einer derartigen Zunderschicht versehenen Stahlbändern läßt sich die Erfindung wirtschaftlich einsetzen.

Dabei ergeben sich besonders gute Schweißergebnisse, wenn die Schicht im Zuge des Perforierens mit regelmäßig angeordneten Öffnungen versehen wird. Durch die regelmäßige Anordnung der Perforationsöffnungen ist sichergestellt, daß es zu keinen Verwerfungen des Bandes aufgrund einer unregelmäßigen Ausbildung der Schweißnaht kommt. Diese könnten andernfalls im folgenden Walzprozeß das Walzergebnis verschlechtern oder zu einem vorzeitigen Verschleiß der in den Walzgerüsten eingesetzten Walzen führen.

Gemäß einer Variante der Erfindung ist es vorgesehen, die zu verbindenden Enden der Bänder nach dem Perforieren miteinander in Kontakt zu bringen und daran anschließend zu verschweißen. Bei dieser Ausgestaltung des erfindungsgemäßen Verfahrens werden das Perforieren und das Verschweißen in zwei zeitlich aufeinanderfolgenden Arbeitszügen durchgeführt. Dies hat den Vorteil, daß Schichten auf beiden Seiten der jeweiligen Bandenden perforiert werden können. Daraus ergeben sich insbesondere dann Vorteile, wenn die Bandenden zum Verschweißen überlappend aufeinandergelegt gelegt werden. Denn in diesem Fall können die zu verschweißenden Enden der Bänder sowohl auf der der Schweißeinrichtung zugeordneten Oberfläche als auch im Bereich der Flächen perforiert werden, in denen während des Schweißens ein unmittelbarer Kontakt zwischen ihnen besteht.

Eine hinsichtlich des Kostenaufwands weiter optimierte Alternative zu der Perforierung der beidseitig an den jeweiligen Bandenden vorhandenen Schichten besteht darin, daß die zu verbindenden Enden der Bänder vor dem Perforieren miteinander in Kontakt gebracht werden. In diesem Fall wird die Perforierung jeweils nur auf den Oberflächen der Metallbänder durchgeführt, auf welcher die Widerstandsschweißeinrichtung während des Schweißvorganges sitzt. Eine gezielte Perforation der nach dem Aufeinanderlegen nicht mehr zugänglichen Kontaktflächen zwischen den Metallbändern findet demgegenüber nicht statt. Überraschend hat sich jedoch gezeigt, daß der durch die Perforation der frei zugänglichen Oberflächen sichergestellte Kontakt zu der Widerstandsschweißeinrichtung in vielen Anwendungsfällen dennoch für die Erzeugung einer sicheren Schweißverbindung zwischen den Metallbändern ausreichend ist. Der besondere Vorzug dieser Variante der Erfindung besteht dabei darin, daß das Perforieren und Verschweißen in einem Arbeitszug erfolgen kann. Indem die Perforierung und die Verschweißung in einem solchen gemeinsamen Bewegungsablauf durchgeführt werden, läßt sich der für das Verbinden benötigte Zeitaufwand auf eine Minimum reduzieren.

Eine weitere vorteilhafte Ausgestaltung der Erfindung ist dadurch gekennzeichnet, daß die Perforierung der jeweiligen Schichten beider Enden der Bänder gleichzeitig erfolgt. Unabhängig davon, ob die Perforation der Schichten vorgenommen wird, bevor die Bänder in Kontakt miteinander gebracht werden oder während sie sich schon in Kontakt befinden, führt diese Vorgehensweise zu einer weiteren Verkürzung der für den Vorgang des Verbindens der Bandenden benötigten Zeit.

Hinsichtlich der Vorrichtung wird die voranstehend genannte Aufgabe durch eine Vorrichtung zum Verschweißen von Enden eines Metallbandes, welches mit einer auf ihnen haftenden Schicht überzogen ist, gelöst, die mit mindestens einer Widerstandsschweißeinrichtung und mit einer Perforationseinrichtung zum Perforieren mindestens der Schicht ausgestattet ist, welche im Bereich der zu erzeugenden Schweißnaht auf derjenigen Oberfläche der Bänder haftet, auf der die Widerstandsschweißeinrichtung während des Schweißvorgangs aufgesetzt ist. Mit einer derart ausgebildeten Vorrichtung lassen sich insbesondere Warmbänder, die eine fest haftende Zunderschicht besitzen, durch eine Widerstandsschweißung auf kostengünstige Weise verbinden.

Dabei ist es im Hinblick auf eine Optimierung der benötigten Zeiten vorteilhaft, wenn jedem der beiden zu verbindenden Enden der Bänder eine eigene Perforationseinrichtung zugeordnet ist.

Weiter vermindern läßt sich der für das Verschweißen benötigte Zeitaufwand dadurch, daß jeweils mindestens eine Perforationseinrichtung unter und eine Perforationseinrichtung über dem Förderweg der Bänder angeordnet ist. Mit einer derart ausgestalteten erfindungsgemäßen Vorrichtung kann problemlos eine gleichzeitige Perforation der jeweils frei zugänglichen Schichten an der Ober- und Unterseite der Bänder durchgeführt werden. Für solche Anwendungsfälle, bei denen die Perforation der Schicht vor dem örtlichen Zusammenfügen der Bandenden erfolgen soll, kann dies ebenso zeitsparend dadurch bewerkstelligt werden, daß jedem Ende der Bänder jeweils eine unter und eine oberhalb des Förderweges der Bänder angeordnete Perforationseinrichtung zugeordnet ist.

Besonders kostengünstig läßt sich eine erfindungsgemäße Vorrichtung dadurch verwirklichen, daß die Widerstandsschweißeinrichtung während des Schweißvorgangs in an sich bekannter Weise quer zur Förderrichtung der Bänder bewegbar ist. Bei dieser Ausgestaltung der Erfindung wird die Schweißelektrode der Widerstandsschweißeinrichtung entlang der Bandendkante geführt, so daß der Schweißvorgang als solcher jeweils örtlich begrenzt stattfindet. Auf diese Weise lassen sich die Elektrodenform, die Schweißparameter und die während des Schweißens örtlich ausgeübten Anpreßkräfte auf einfache Weise optimieren.

In vergleichbarer Weise können die Bedingungen während des Perforierens optimiert werden, wenn auch die Perforationseinrichtung quer zur Förderrichtung der Bänder bewegbar ist.

Sind sowohl die Schweißeinrichtung als auch die Perforationseinrichtung bewegbar, so ist eine besonders bevorzugte Ausgestaltung der Erfindung dadurch gekennzeichnet, daß die Perforationseinrichtung und die Widerstandsschweißeinrichtung gemeinsam bewegbar sind.

In diesem Zusammenhang günstig ist es, wenn die Perforationseinrichtung in der Bewegungsrichtung gesehen, welche die Widerstandsschweißeinrichtung während des Schweißvorgangs einschlägt, vor der Widerstandsschweißeinrichtung angeordnet ist. Diese Ausgestaltung eignet sich in besonderer Weise zum Verbinden von solchen Metallbändern, deren Bandenden vor dem Perforieren der dann noch frei zugänglichen Schichten in Kontakt gebracht werden.

Die Perforationen können grundsätzlich mit jeder Vorrichtung erzeugt werden, die geeignet ist, eine ausreichende Zahl von Öffnungen in die auf den Metallbändern haftende Schicht zu brechen. Besonders einfach läßt sich dies beispielsweise dadurch bewerkstelligen, daß die Perforationen mittels eines drehbar gelagerten Rades erzeugt werden. Dieses kann beispielsweise unter einem Druck über die Schicht bewegt werden, der so hoch ist, daß die Schicht zumindest stellenweise von dem Metallband abplatzt. Gleichmäßiger angeordnete Öffnungen der Schicht lassen sich dabei dadurch erzeugen, daß auf dem Umfang des Rades Erhebungen in gleichmäßiger Folge angeordnet sind, welche in die Schicht eindringen und so die Öffnungen erzeugen.

Nachfolgend wird die Erfindung anhand einer Ausführungsbeispiele darstellenden Zeichnung erläutert. Es zeigen schmatisch:
- Fig. 1: eine Vorrichtung zum Verbinden der Enden zweier Warmbänder in einer seitlichen Ansicht;
- Fig. 2: die Vorrichtung gemäß Fig. 1 in einer ersten Betriebsstellung in seitlicher Ansicht;
- Fig. 3: die Vorrichtung gemäß Fig. 2 in einem Schnitt quer zur Förderrichtung der Warmbänder;
- Fig. 4: die Vorrichtung gemäß Fig. 1 in einer zweiten Betriebsstellung in seitlicher Ansicht;
- Fig. 5: die Vorrichtung gemäß Fig. 4 in einem Schnitt quer zur Förderrichtung der Warmbänder;
- Fig. 6: eine andere Vorrichtung zum Verbinden der Enden zweier Warmbänder in einer seitlichen Ansicht;
- Fig. 7: die Vorrichtung gemäß Fig. 6 in einer ersten Betriebsstellung in seitlicher Ansicht;
- Fig. 8: die Vorrichtung gemäß Fig. 7 in einem Schnitt quer zur Förderrichtung der Warmbänder.

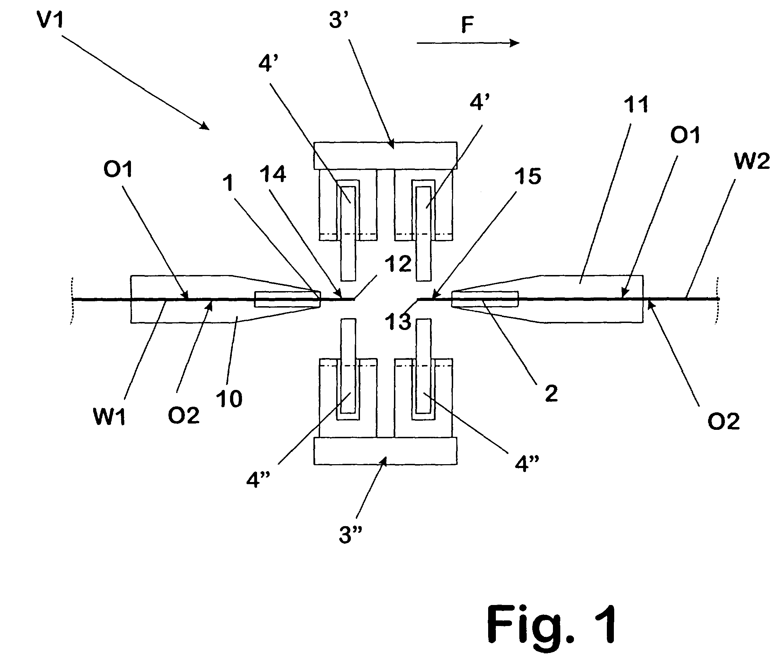

Die in den Figuren 1 bis 5 dargestellte Vorrichtung V1 ist zum Verbinden der Enden 1,2 von zwei in Förderrichtung F durch eine weiter nicht dargestellte Walzstraße geförderten Warmbändern W1,W2 bestimmt, auf deren jeweiliger Oberfläche 01,02 eine aus vorhergehenden Schritten der Stahlbandproduktion stammende Zunderschicht fest haftet.

Die Vorrichtung 1 weist einen oberhalb der Warmbänder W1,W2 angeordneten ersten Wagen 3' und einen unterhalb der Warmbänder W1,W2 angeordneten zweiten Wagen 3" auf. Beide Wagen 3',3" sind derart miteinander verkoppelt, daß sie gemeinsam in einer quer zur Förderrichtung F gerichteten Bewegungsrichtung Q über die Breite der Warmbänder W1,W2 bewegbar sind.

Die Wagen 3',3" tragen jeweils eine Perforationseinrichtung 4',4", eine Widerstandsschweißeinrichtung 5',5" und eine Staucheinrichtung 6',6".

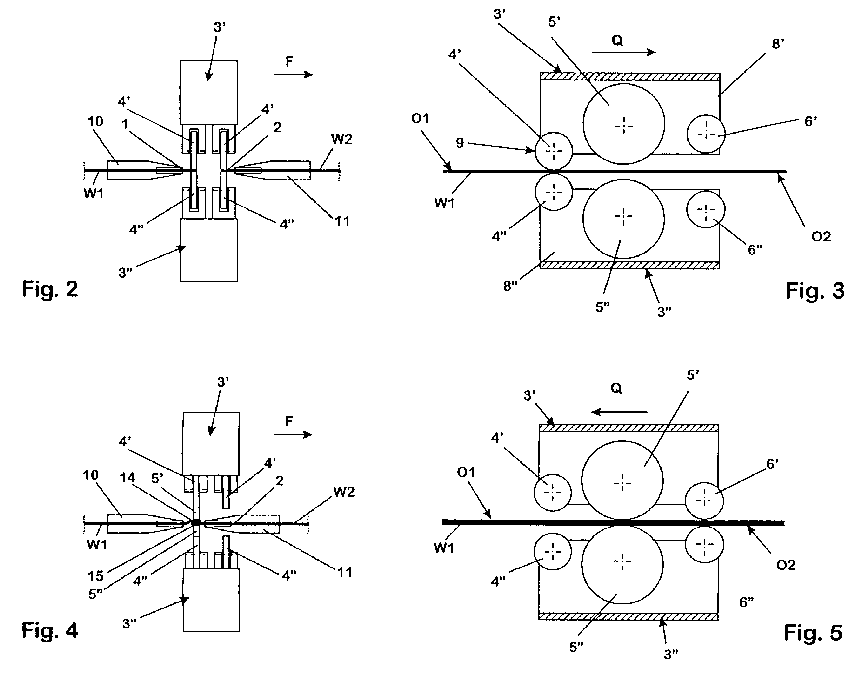

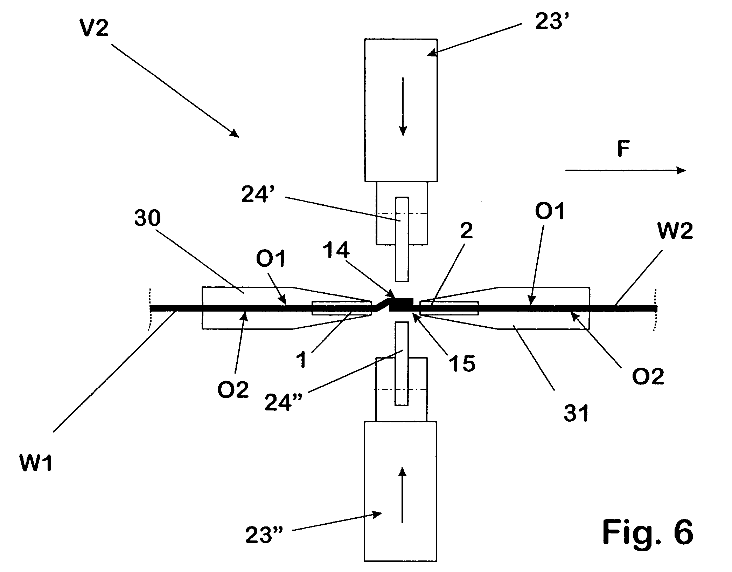

Die jeweilige Perforationseinrichtung 4',4" ist als drehbar am Gehäuse 8',8" des jeweiligen Wagens 3',3" gelagertes, scheibenförmiges Rad ausgebildet, auf dessen Umfangsfläche 9 jeweils in regelmäßigen Abständen hier im einzelnen nicht dargestellte Erhebungen angeordnet sind. Über eine ebenfalls nicht dargestellte Stelleinrichtung kann die Perforationseinrichtung 4',4" in vertikaler Richtung in eine Ruhestellung gehoben (Figuren 4,5) oder in eine Arbeitsstellung gesenkt werden (Figuren 2,3), in welcher sie auf der Oberfläche 01,02 des jeweiligen Metallbandes W1,W2 sitzt.

Die jeweilige Widerstandsschweißeinrichtung 5',5" ist nach Art einer drehbar an dem jeweiligen Wagen 3',3" gelagerten Elektrode ausgebildet und wird über eine nicht dargestellte Energierversorgung gespeist. Auch die Widerstandsschweißeinrichtung 5',5" kann über eine ebenso nicht gezeigte Stelleinrichtung in vertikaler Richtung in eine Ruhestellung gehoben (Figuren 2,3) oder in eine Arbeitsstellung gesenkt werden (Figuren 4,5), in welcher sie unter Krafteinwirkung auf die ihr jeweils zugeordnete Oberfläche O1 bzw. O2 des jeweiligen Warmbandes W1,W2 gepreßt wird.

Die jeweilige Staucheinrichtung 6',6" ist als Rolle ausgebildet, die ebenfalls in dem jeweiligen Gehäuse 8',8" gelagert ist. Auch sie kann in vertikaler Richtung in eine Ruhestellung gehoben (Figuren 2,3) oder in eine Arbeitsstellung gesenkt werden (Figuren 4,5), in welcher sie auf der Oberfläche O1,O2 des jeweiligen Warmbandes W1,W2 sitzt.

Bevor die Enden 1,2 der Warmbänder W1,W2 miteinander verbunden werden, werden sie von zwei Führungseinrichtungen 10,11 erfaßt, beabstandet zueinander fixiert und mittels einer nicht dargestellten Schneideinrichtung im Bereich ihrer Enden 1,2 so beschnitten, daß die einander zugeordneten Kanten 12,13 der Enden 1,2 einen sauberen, parallelen Verlauf aufweisen.

Dann fahren die Wagen 3',3" bei in Arbeitstellung befindlichen Perforierungseinrichtungen 4',4" und in Ruhestellung befindlichen Widerstandsschweiß- 5',5" und Staucheinrichtungen 6',6" in Bewegungsrichtung Q über die gesamte Breite der Endabschnitte 14,15, innerhalb der im nachfolgenden Arbeitsschritt die Schweißverbindung erzeugt wird (Figuren 2,3). Dabei werden die Enden 1,2 der Warmbänder W1,W2 gleichzeitig durch die ihnen zugeordneten Perforationseinrichtungen 4',4" auf ihrer jeweiligen oberen Oberfläche 01 und ihrer jeweiligen unteren Oberfläche 02 bearbeitet. Die unter einer Druckkraft auf die jeweilige Oberfläche 01,02 gedrückten Perforationseinrichtungen 4',4" rollen zu diesem Zweck auf der betreffenden Oberfläche 01,02 ab und prägen nach Art eines Rändelrades mit ihren Erhebungen im Bereich der Endabschnitte 14,15 in die auf den Oberflächen 01,02 vorhandenen Zunderschichten Öffnungen ein. Im Bereich der so in regelmäßigen Abständen erzeugten Perforationen ist die jeweils unter der Zunderschicht liegende Oberfläche der Warmbänder W1,W2 freigelegt.

Anschließend werden die Enden 1,2 der Warmbänder W1,W2 durch entsprechende Bewegungen der Führungseinrichtungen 10,11 aufeinander zu bewegt und so ausgerichtet, daß sie einander im Bereich der Endabschnitte 14,15 überlappen. Nach erfolgter Ausrichtung der Endabschnitte 14,15 werden die sich zu diesem Zeitpunkt am einen Ende ihrer ersten Arbeitsbewegung befindenden Wagen 3',3" in entgegengesetzter Bewegungsrichtung Q bewegt. Dabei sind die Perforationseinrichtungen 4',4" angehoben. Die Widerstandsschweißeinrichtungen 5',5" sind dagegen auf die jeweilige Oberfläche O1,O2 abgesenkt und werden mit Energie gespeist, so daß die einander überlappenden Endabschnitte 14,15 der Warmbänder W1,W2 miteinander verschweißt werden. Die so erzeugte Schweißnaht wird durch die ebenfalls abgesenkte und die in dieser Bewegungsrichtung Q gesehen hinter den Widerstandsschweißeinrichtungen 5',5" angeordnete jeweilige Staucheinrichtung 6',6" gestaucht, so daß Aufwerfungen der Schweißnaht eingeebnet werden.

Die in den Figuren 6 bis 8 gezeigte alternative Vorrichtung V2 zum Verbinden der Enden 1,2 von zwei Warmbändern W1,W2 weist ebenfalls zwei Wagen 23',23", die entsprechend den Wagen 3',3" des zuerst erläuterten Beispiels in einem Arbeitszug gemeinsam in Bewegungsrichtung Q quer zur Förderrichtung F der Warmbänder W1,W2 bewegbar sind.

Wie die Wagen 3',3" tragen die Wagen 23',23" jeweils eine Perforationseinrichtung 24',24", eine Widerstandsschweißeinrichtung 25',25" und eine Staucheinrichtung 26',26". Im Unterschied zu den Wagen 3',3" weisen die Wagen 23',23" jedoch jeweils nur eine Perforationseinrichtung 24',24" auf, wobei die jeweilige Perforationseinrichtung 24',24", die jeweilige Widerstandsschweißeinrichtung 25',25" und die jeweilige Staucheinrichtung 26',26" der Wagen 23',23" in einer Linie hintereinander parallel zu den Kanten 12,13 der Enden 1,2 angeordnet sind und die jeweilige Perforationseinrichtung 24',24" in Richtung der bei einem Arbeitszug eingeschlagenen Bewegungsrichtung Q gesehen vor der jeweiligen Widerstandsschweißeinrichtung 25',25" angeordnet ist.

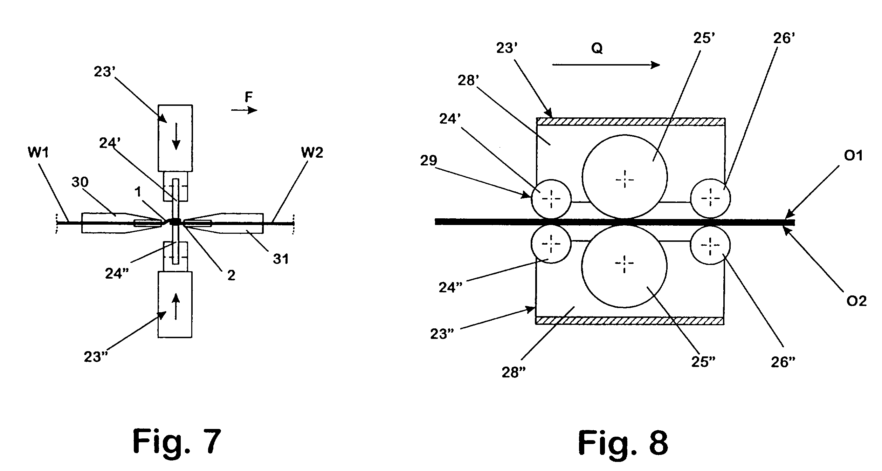

Die jeweilige Perforationseinrichtung 24',24" ist wiederum als drehbar am Gehäuse 28',28" des jeweiligen Wagens 23',23" gelagertes scheibenförmiges Rad ausgebildet, auf dessen Umfangsfläche 29 jeweils in regelmäßigen Abständen hier im einzelnen nicht dargestellte Erhebungen angeordnet sind. Wie bei den Wagen 3',3" kann die Perforationseinrichtung 24',24" über eine ebenfalls nicht dargestellte Stelleinrichtung in vertikaler Richtung in eine Ruhestellung gehoben (Fig. 6) oder in eine Arbeitsstellung gesenkt werden (Figuren 7,8), in welcher sie auf der Oberfläche 01,02 des jeweiligen Metallbandes W1,W2 sitzt.

Ebenso wie beim Wagen 3',3" ist die jeweilige Widerstandsschweißeinrichtung 25',25" nach Art einer drehbar an dem jeweiligen Wagen 23',23" gelagerten Elektrode ausgebildet und wird über eine nicht dargestellte Energierversorgung gespeist. Auch die Widerstandsschweißeinrichtung 25',25" kann in vertikaler Richtung in eine Ruhestellung gehoben (Fig. 6 ) oder in eine Arbeitsstellung gesenkt werden (Figuren 7,8), in welcher sie unter Krafteinwirkung auf die ihr jeweils zugeordnete Oberfläche O1 bzw. O2 des jeweiligen Metallbandes W1,W2 gepreßt wird.

Die jeweilige Staucheinrichtung 26',26" ist wie die zuvor erläuterten Staucheinrichtungen 6',6" als Rolle ausgebildet, die ebenfalls in dem jeweiligen Gehäuse 28',28" gelagert ist. Auch sie kann in vertikaler Richtung in eine Ruhestellung gehoben (Fig. 6) oder in eine Arbeitsstellung gesenkt werden (Figuren 7,8), in welcher sie auf der Oberfläche O1,O2 des jeweiligen Metallbandes W1,W2 sitzt.

Auch beim Ausführungsbeispiel gemäß der Figuren 6 bis 8 werden die Enden 1,2 der Warmbänder W1,W2 zunächst von zwei Führungseinrichtungen 30,31 erfaßt, beabstandet zueinander fixiert und mittels einer nicht dargestellten Schneideinrichtung im Bereich ihrer Enden 1,2 so geschnitten, daß die einander zugeordneten Kanten 12,13 der Enden 1,2 einen sauberen, parallelen Verlauf aufweisen.

Im Unterschied zu dem zuvor erläuterten Beispiel werden die Enden 1,2 der Warmbänder W1,W2 anschließend jedoch sofort durch entsprechende Bewegungen der Führungseinrichtungen 30,31 aufeinander zu bewegt und so ausgerichtet, daß sie einander im Bereich der Endabschnitte 14,15 überlappen (Fig. 6).

Nach erfolgter Ausrichtung der Endabschnitte 14,15 werden die sich zu diesem Zeitpunkt am Anfang ihrer Arbeitsbewegung befindenden Wagen 23',23" in Bewegungsrichtung Q bewegt. Dabei sind die jeweiligen Perforationseinrichtungen 24',24", die jeweiligen Widerstandsschweißeinrichtungen 25',25" und die jeweiligen Staucheinrichtungen 26',26" auf die jeweilige Oberfläche 01,02 abgesenkt. Auf diese Weise erzeugen die Perforationseinrichtungen 24',24" eine regelmäßige Perforation der den Widerstandsschweißeinrichtungen 25',25" jeweils zugeordneten Oberfläche O1 auf der Oberseite des Warmbandes W1 bzw. der Oberfläche O2 auf der Unterseite des Warmbandes W2.

Wenn die Widerstandsschweißeinrichtungen 25',25" die perforierte Stelle erreichen, an der unmittelbar zuvor die Oberfläche der Warmbänder W1,W2 unter dem Zunder von der jeweiligen Perforationseinrichtung 24',24" freigelegt worden ist, entsteht ein direkter Kontakt und es wird die für die Verschweißung notwendige Wärme erzeugt. Diese ist in diesem Falle ausreichend, obwohl eine Perforierung der zwischen den aufeinanderliegenden Endabschnitten 14,15 vorhandenen Zunderschicht nicht stattgefunden hat. Die so erzeugte Schweißnaht wird durch die ebenfalls abgesenkte und in dieser Bewegungsrichtung Q gesehen hinter den Widerstandsschweißeinrichtungen 25',25" angeordnete jeweilige Staucheinrichtung 26',26" gestaucht, so daß Aufwerfungen der Schweißnaht eingeebnet werden.

### BEZUGSZEICHEN

- F: Förderrichtung
- O1,O2: Oberfläche
- V1: Vorrichtung
- V2: Vorrichtung
- W1,W2: Warmbänder
- Q: Bewegungsrichtung

- 1,2: Enden

- 3',3": Wagen
- 4',4": Perforationseinrichtung
- 5',5": Widerstandsschweißeinrichtung
- 6', 6": Staucheinrichtung
- 8',8": Gehäuse
- 9: Umfangsfläche

- 10, 11: Führungseinrichtungen
- 12,13: Kanten
- 14,15: Endabschnitte

- 23',23": Wagen
- 24',24": Perforationseinrichtung
- 25',25": Widerstandsschweißeinrichtung
- 26',26": Staucheinrichtung
- 28',28": Gehäuse
- 29: Umfangsfläche
- 30,31: Führungseinrichtungen

## Patentansprüche

1. Verfahren zum Verbinden der Enden (1,2) von zwei in einer Walzstraße verarbeiteten Bändern (W1,W2) aus Metall, welche auf ihrer Ober- und/oder Unterseite eine auf ihnen haftende Schicht aufweisen, durch Widerstandsschweißen, bei dem eine Schweißeinrichtung (5',5";25',25") auf die ihr jeweils zugeordnete Oberfläche (01,02) im Bereich der Enden (1,2) der Bänder (W1,W2) aufgesetzt wird, **dadurch gekennzeichnet**, **daß** vor dem Widerstandsschweißen die Schicht in dem Bereich (14,15) mit Perforationen versehen wird, in welchem während des Schweißvorgangs die Schweißverbindung erzeugt wird.

2. Verfahren nach Anspruch 1, **dadurch gekennzeichnet**,**daß** die Schicht im Zuge des Perforierens mit regelmäßig angeordneten Öffnungen versehen wird.

3. Verfahren nach einem der voranstehenden Ansprüche,
**dadurch gekennzeichnet**, **daß**
die zu verbindenden Enden der Bänder (W1,W2) nach dem Perforieren miteinander in Kontakt gebracht werden und daran anschließend verschweißt werden.

4. Verfahren nach einem der voranstehenden Ansprüche,
**dadurch gekennzeichnet**, **daß**
die zu verschweißenden Enden (1,2) der Bänder (W1,W2) sowohl auf der der Schweißeinrichtung (5',5";25',25") zugeordneten Oberfläche (01,02) als auch im Bereich der Flächen perforiert werden, in denen ein unmittelbarer Kontakt zwischen ihnen besteht.

5. Verfahren nach einem der Ansprüche 1 oder 2,
**dadurch gekennzeichnet**, **daß**
die zu verbindenden Enden (1,2) der Bänder (W1,W2) vor dem Perforieren miteinander in Kontakt gebracht werden.

6. Verfahren nach Anspruch 5, **dadurch gekennzeichnet**,**daß**das Perforieren und Verschweißen in einem Arbeitszug erfolgt.

7. Verfahren nach einem der voranstehenden Ansprüche,
**dadurch gekennzeichnet**, **daß**
die Enden (1,2) der Bänder zum Verschweißen überlappend aufeinandergelegt werden.

8. Verfahren nach einem der voranstehenden Ansprüche,
**dadurch gekennzeichnet**, **daß**
die Perforierung der jeweiligen Schichten beider Enden (1,2) der Bänder (W1,W2) gleichzeitig erfolgt.

9. Vorrichtung zum Verschweißen von Enden (1,2) von zwei Metallbändern (W1,W2), welches mit einer auf ihnen haftenden Schicht überzogen ist, mit mindestens einer Widerstandsschweißeinrichtung (5',5";25',25") und mit einer Perforationseinrichtung (4',4";24',24") zum Perforieren mindestens der Schicht, welche im Bereich der zu erzeugenden Schweißnaht auf derjenigen Oberfläche (01,02) der Bänder (W1,W2) haftet, auf der die Widerstandsschweißeinrichtung (5',5";25',25") während des Schweißvorgangs aufgesetzt ist.

10. Vorrichtung nach Anspruch 9, **dadurch gekennzeichnet**, **daß** jedem der beiden zu verbindenden Enden (1,2) der Bänder (W1,W2) eine eigene Perforationseinrichtung (4',4";24',24") zugeordnet ist.

11. Vorrichtung nach einem der Ansprüche 9 oder 10,
**dadurch gekennzeichnet**, **daß**
jeweils mindestens eine Perforationseinrichtung (4',4";24',24") unter und eine Perforationseinrichtung (4',4";24',24") über dem Förderweg der Bänder (W1,W2) angeordnet ist.

12. Vorrichtung nach Anspruch 11, **dadurch gekennzeichnet, daß** jedem Ende (1,2) der Bänder (W1,W2) jeweils eine unter und eine oberhalb des Förderweges der Bänder (W1,W2) angeordnete Perforationseinrichtung (4',4";24',24") zugeordnet ist.

13. Vorrichtung nach einem der Ansprüche 9 bis 12,
**dadurch gekennzeichnet**, **daß**
die Widerstandsschweißeinrichtung (5',5";25',25") während des Schweißvorgangs quer zur Förderrichtung (F) der Bänder (W1,W2) bewegbar ist.

14. Vorrichtung nach einem der Ansprüche 8 bis 13,
**dadurch gekennzeichnet**, **daß**
die Perforationseinrichtung (4',4";24',24") quer zur Förderrichtung (F) der Bänder (W1,W2) bewegbar ist.

15. Vorrichtung nach Anspruch 13 und 14, **dadurch gekennzeichnet**, **daß** die Perforationseinrichtung (4',4";24',24") und die Widerstandsschweißeinrichtung (5',5";25',25") gemeinsam bewegbar sind.

16. Vorrichtung nach Anspruch 15, **dadurch gekennzeichnet**, **daß** die Perforationseinrichtung (4',4";24',24") in während des Schweißvorgangs eingeschlagener Bewegungsrichtung (Q) gesehen vor der Widerstandsschweißeinrichtung (5',5";25',25") angeordnet ist.

17. Vorrichtung nach einem der Ansprüche 14 bis 16,
**dadurch gekennzeichnet**, **daß**
die Perforationseinrichtung (4',4";24',24") als drehbar gelagertes Rad ausgebildet ist, auf dessen Umfang Erhebungen ausgebildet sind, welche die Perforationen der Schicht erzeugen.

18. Verwendung einer Vorrichtung gemäß einem der Ansprüche 9 bis 17 zur Durchführung des Verfahrens gemäß einem der Ansprüche 1 bis 8.

19. Verwendung gemäß Anspruch 18, **dadurch gekennzeichnet**, **daß** die Metallbänder Warmbänder (W1,W2) sind, auf denen eine Zunderschicht haftet.
